# EUROPEAN PATENT APPLICATION

(11) **EP 3 489 387 A1**
(43) Date of publication of application: **29.05.2019**
(21) Application number: 17824083.4
(22) Date of filing: 27.06.2017
(51) Int. Cl.: C23F 11/14, C02F 1/70, C23F 11/12, F22B 37/52

(54) **DEOXIDIZING AGENT FOR BOILERS AND METHOD FOR DEOXIDIZING BOILER WATER SYSTEM**

(30) Priority: 06.07.2016 JP 2016134271
(71) Applicant: Kurita Water Industries Ltd., Tokyo 164-0001 (JP)
(72) Inventor: LIN, Qian, Tokyo 164-0001 (JP); SHIMURA, Yukimasa, Tokyo 164-0001 (JP)
(74) Representative: TBK
(86) International application number: PCT/JP2017/023600
(87) International publication number: WO 2018/008477

(57) **Abstract**

The present invention provides a deoxidizing agent for boilers excellent in an oxygen removal effect under wide temperature conditions. The deoxidizing agent for boilers comprises (A) a hydroxylamine compound represented by the following general formula (I), (B) a heterocyclic compound having an N-substituted amino group, and (C) an aminophenol derivative represented by the following general formula (II), 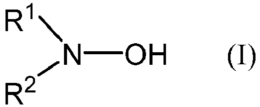 wherein R¹ and R² each independently represent an alkyl group having 1 to 5 carbon atoms; 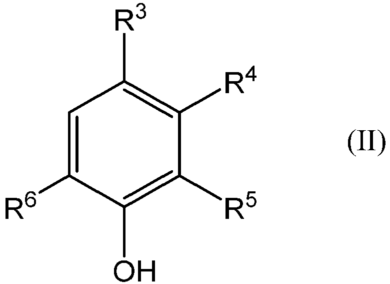 wherein R³ to R⁶ each independently represent any one of (a) the following general formula (III), (b) -OR¹⁰ and (c) -R¹¹, at least one of R³ to R⁶ representing (a), and R¹⁰ and R¹¹ each independently represent a hydrogen atom or an alkyl group having 1 to 4 carbon atoms; 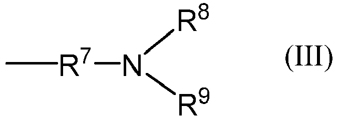 wherein R⁷ represents a single bond or an alkylene group having 1 to 4 carbon atoms, and R⁸ and R⁹ each independently represent a hydrogen atom or an alkyl group having 1 to 4 carbon atoms.

## Description

### Technical Field

The present invention relates to a deoxidizing agent for boilers, and a method for deoxidizing a boiler water system.

### Background Art

Dissolved oxygen contained in feed-water for a boiler, a steam generator or the like can be a cause of corrosion of a heat exchanger, an economizer, a pipe of a steam condenser system and the like disposed in various stages of the boiler. Therefore, in order to prevent the corrosion in such a boiler system, it is necessary to perform a treatment for removing dissolved oxygen from the feed-water.

A deoxidation treatment method is divided into a physical treatment method and a chemical treatment method, and in general, the chemical treatment method is singly employed or the physical treatment method and the chemical treatment method are employed together. As the physical treatment method, a method of heating degassing, vacuum degassing or membrane degassing is employed. On the other hand, as the chemical treatment method, a method in which a deoxidizing agent such as hydrazine, sodium sulfite or a glucose is added to boiler feed-water has been widely employed.

Among the conventionally used deoxidizing agents, however, hydrazine has become questioned about safety, and hence its handling is regarded as problematic. A sulfate ion is produced as a reaction product from sodium sulfite, and hence there is a problem that the corrosion and scale deposition are easily caused in a boiler system.

As a deoxidizing agent to be used instead of hydrazine, means described in PTLs 1 to 6 have been proposed.

### Citation List

### Patent Literature

PTL 1: JP 63-63272 A
PTL 2: JP 2003-147554 A
PTL 3: JP 57-102285 A
PTL 4: US 4929364 B
PTL 5: WO2015/018508
PTL 6: JP 3855961 B

### Summary of Invention

### Technical Problem

In PTL 1, carbohydrazide is used as a deoxidizing agent. When carbohydrazide is heated to a high temperature, however, hydrazine is produced, and hence this is not a fundamental solution.

In PTL 2, tannin is used as a deoxidizing agent. When tannin is added at a high concentration in hot water, however, there arises a problem that treated water is colored.

In PTL 3, an aminophenol derivative is used as a deoxidizing agent. The aminophenol derivative has, however, a problem that it needs to be added in a large amount.

In PTL 4, gallic acid and a derivative thereof are used as a deoxidizing agent. When gallic acid and a derivative thereof are added in a large amount, however, an organic acid is easily produced, which causes a problem that the quality of steam is harmfully affected.

In PTL 5, dialkylhydroxylamine and an aminophenol derivative are used together as a deoxidizing agent. Dialkylhydroxylamine has, however, a problem that it needs to be added in a large amount because its deoxidizing rate is low, which causes a problem that the aminophenol derivative also needs to be added in a large amount. Therefore, even when dialkylhydroxylamine and the aminophenol derivative are used together, dissolved oxygen cannot be removed under wide temperature conditions with a small addition amount.

In PTL 6, a hydroxylamine compound and a heterocyclic compound having an N-substituted amino group are used together as a deoxidizing agent. Dialkylhydroxylamine has, however, a problem that it needs to be added in a large amount because its deoxidizing rate is low, and the heterocyclic compound having an N-substituted amino group has a problem that its deoxidizing rate is low under low temperature condition. Therefore, even when the hydroxylamine compound and the heterocyclic compound having an N-substituted amino group are used together, dissolved oxygen cannot be removed under wide temperature conditions with a small addition amount.

The present invention was devised under these circumstances, and an object is to provide a deoxidizing agent for boilers excellent in an oxygen removal effect under wide temperature conditions, and a method for deoxidizing a boiler water system using the same.

### Solution to Problem

In order to solve the above-described problems, the present invention provides the following [1] to [10]:
[1] A deoxidizing agent for boilers, comprising (A) a hydroxylamine compound represented by the following general formula (I), (B) a heterocyclic compound having an N-substituted amino group, and (C) an aminophenol derivative represented by the following general formula (II), 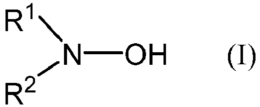 wherein R¹ and R² each independently represent an alkyl group having 1 to 5 carbon atoms; 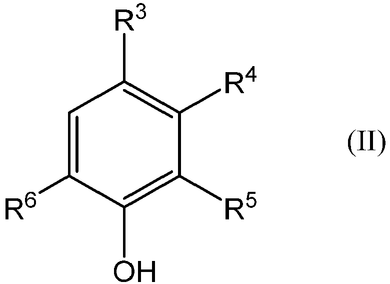 wherein R³ to R⁶ each independently represent any one of (a) the following general formula (III), (b) -OR¹⁰ and (c) -R¹¹, at least one of R³ to R⁶ representing (a), and R¹⁰ and R¹¹ each independently represent a hydrogen atom or an alkyl group having 1 to 4 carbon atoms; 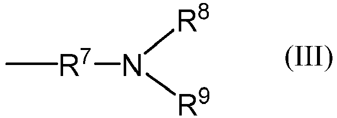 wherein R⁷ represents a single bond or an alkylene group having 1 to 4 carbon atoms, and R⁸ and R⁹ each independently represent a hydrogen atom or an alkyl group having 1 to 4 carbon atoms.
[2] The deoxidizing agent for boilers according to [1] above, in which the hydroxylamine compound of the component (A) is N,N-diethylhydroxylamine.
[3] The deoxidizing agent for boilers according to [1] or [2] above, in which the heterocyclic compound of the component (B) is one or more selected from the group consisting of 1-amino-4-methylpiperazine and 1-aminopyrrolidine.
[4] The deoxidizing agent for boilers according to any one of [1] to [3] above, in which the aminophenol derivative of the component (C) is one or more selected from the group consisting of 4-aminophenol, 2-aminophenol, 4-amino-3-methylphenol, 3-amino-4-methylphenol and 4-amino-3-(aminomethyl)-phenol.
[5] The deoxidizing agent for boilers according to any one of [1] to [4] above, in which a mass ratio between the hydroxylamine compound of the component (A) and the heterocyclic compound of the component (B) is 1:10 to 10:1, a mass ratio between the hydroxylamine compound of the component (A) and the aminophenol derivative of the component (C) is 2:1 to 20:1, and a mass ratio between the heterocyclic compound of the component (B) and the aminophenol derivative of the component (C) is 2:1 to 20:1.
[6] The deoxidizing agent for boilers according to any one of [1] to [5] above, further comprising (D) an aromatic compound substituted with at least two or more hydroxy groups and not having an amino group or a substituted amino group.
[7] The deoxidizing agent for boilers according to [6] above, in which the aromatic compound of the component (D) is one or more selected from the group consisting of orcinol, resorcinol and propyl gallate.
[8] The deoxidizing agent for boilers according to [6] or [7] above, in which a ratio between a total mass of the hydroxylamine compound of the component (A) and the heterocyclic compound of the component (B) and a total mass of the aminophenol derivative of the component (C) and the aromatic compound of the component (D) is 2:1 to 20:1.
[9] A method for deoxidizing a boiler water system, in which the deoxidizing agent for boilers according to any one of claims 1 to 8 is added to a boiler water system.
[10] The method for deoxidizing a boiler water system according to [9] above, in which the deoxidizing agent for boilers is added in such a manner that a concentration of the hydroxylamine compound of the component (A) in boiler feed-water be 0.001 to 1000 mg/L, that a concentration of the heterocyclic compound of the component (B) in the boiler feed-water be 0.001 to 1000 mg/L, and that a concentration of the aminophenol derivative of the component (C) in the boiler feed-water be 0.0001 to 500 mg/L.

### Advantageous Effects of Invention

According to a deoxidizing agent for boilers and a method for deoxidizing a boiler water system of the present invention, oxygen removal efficiency can be increased under wide temperature conditions, and corrosion in a range from a feed-water system to a boiler water system can be effectively prevented.

### Description of Embodiments

### [Deoxidizing Agent for Boilers]

A deoxidizing agent for boilers of the present invention comprises (A) a hydroxylamine compound represented by the following general formula (I), (B) a heterocyclic compound having an N-substituted amino group, and (C) an aminophenol derivative represented by the following formula (II): 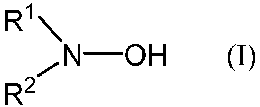 wherein R¹ and R² each independently represent an alkyl group having 1 to 5 carbon atoms; 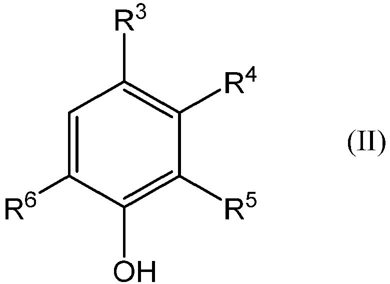 wherein R³ to R⁶ each independently represent any one of (a) the following general formula (III), (b) -OR¹⁰ and (c) -R¹¹, at least one of R³ to R⁶ representing (a), and R¹⁰ and R¹¹ each independently represent a hydrogen atom or an alkyl group having 1 to 4 carbon atoms. 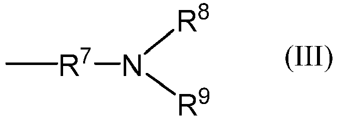 wherein R⁷ represents a single bond or an alkylene group having 1 to 4 carbon atoms, and R⁸ and R⁹ each independently represent a hydrogen atom or an alkyl group having 1 to 4 carbon atoms.

Since the deoxidizing agent for boilers of the present invention uses the hydroxylamine compound of the component (A), the heterocyclic compound having an N-substituted amino group of the component (B) and the aminophenol derivative of the component (C) together, oxygen removal efficiency can be increased under wide temperature conditions.

### <(A) Hydroxylamine Compound>

The hydroxylamine compound of the component (A) is represented by the following general formula (I): 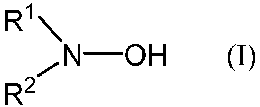 wherein R¹ and R² each independently represent an alkyl group having 1 to 5 carbon atoms.

In the above-described general formula (I), R¹ and R² are preferably an alkyl group having 1 to 2 carbon atoms. Besides, a total number of carbon atoms of R¹ and R² is preferably 2 to 6, and more preferably 3 to 5.

Specific examples of the hydroxylamine compound represented by the above-described formula (I) include N,N-dimethylhydroxylamine, N-isopropylhydroxylamine, N,N-diethylhydroxylamine, N,N-dipropylhydroxylamine and N,N-dibutylhydroxylamine. Among these, N,N-diethylhydroxylamine (herein sometimes referred as "DEHA") is preferred from the viewpoints of the oxygen removal effect under wide temperature conditions and economic efficiency.

### <(B) Heterocyclic Compound having N-substituted Amino Group>

The heterocyclic compound having an N-substituted amino group of the component (B) (hereinafter sometimes referred to as the "heterocyclic compound of the component (B)") has a nitrogen atom as a heterocyclic hetero atom, and is formed by causing an amino group to bond to at least one nitrogen atom working as the hetero atom.

The heterocyclic compound of the component (B) has a total number of carbon atoms of preferably 2 to 8, more preferably 2 to 6, and further preferably 3 to 5. Besides, the heterocyclic compound of the component (B) has preferably no double bond from the viewpoint of the oxygen removal effect under wide temperature conditions.

A heterocycle working as a basic skeleton of the heterocyclic compound of the component (B) is not especially limited as long as it has a nitrogen atom as a heterocyclic hetero atom, and examples include piperazine, pyrrolidine, morpholine, piperidine, hexamethyleneimine, ethyleneimine, pyrrole, pyridine, azepine, imidazole, pyrazole, oxazole, imidazoline and pyrazine. Among these, one having a carbon number of 2 to 8 is preferred, one having a carbon number of 2 to 6 is more preferred, and one having a carbon number of 3 to 5 is further preferred. Besides, among these, one having no double bond in the heterocycle is preferred.

Examples of a heterocycle having a carbon number of 3 to 5 and having no double bond in the heterocycle include piperazine, pyrrolidine, morpholine and piperidine. Among these, piperazine and pyrrolidine are suitable.

Examples of the heterocyclic compound of the component (B) include 1-amino-4-methylpiperazine, 1-aminopyrrolidine, N-aminomorpholine, N-aminohexamethyleneimine and 1-aminopiperidine. Among these, one or more selected from the group consisting of 1-amino-4-methylpiperazine and 1-aminopyrrolidine are suitable from the viewpoints of the oxygen removal effect under wide temperature conditions and the economic efficiency.

### <(C) Aminophenol Derivative>

The aminophenol derivative of the component (C) is represented by the following general formula (II): 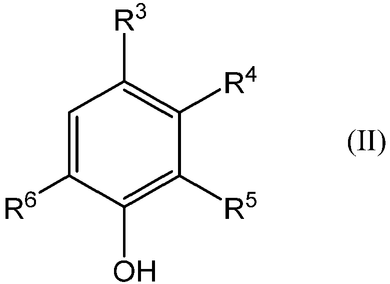 wherein R³ to R⁶ each independently represent any one of (a) the following general formula (III), (b) -OR¹⁰ and (c) -R¹¹, at least one of R³ to R⁶ representing (a), and R¹⁰ and R¹¹ each independently represent a hydrogen atom or an alkyl group having 1 to 4 carbon atoms. 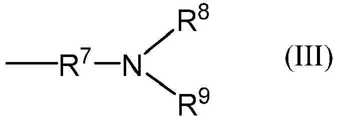 wherein R⁷ represents a single bond or an alkylene group having 1 to 4 carbon atoms, and R⁸ and R⁹ each independently represent a hydrogen atom or an alkyl group having 1 to 4 carbon atoms.

In the general formula (II), R¹⁰ and R¹¹ are each independently preferably a hydrogen atom or an alkyl group having 1 to 2 carbon atoms.

In the general formula (II), the number of groups corresponding to (a) the general formula (III) among R³ to R⁶ is preferably one or two, and more preferably one.

In the general formula (II), at least one of R³ to R⁶ preferably represents (c).

In the general formula (II), a sum of the carbon atoms of R³ to R⁶ is preferably 0 to 4, more preferably 0 to 2, and further preferably 1 to 2.

In the general formula (III), R⁷ is preferably a single bond or an alkylene group having 1 to 2 carbon atoms, and more preferably a single bond.

In the general formula (III), R⁸ and R⁹ are each independently preferably a hydrogen atom or an alkyl group having 1 to 2 carbon atoms, and more preferably a hydrogen atom.

The aminophenol derivative of the component (C) is not especially limited as long as it corresponds to the general formula (II), and from the viewpoints of the oxygen removal effect under wide temperature conditions and the economic efficiency, is preferably one or more selected from the group consisting of 4-aminophenol, 2-aminophenol, 4-amino-3-methylphenol, 3-amino-4-methylphenol and 4-amino-3-(aminomethyl)phenol.

### <Mass Ratio among Components (A) to (C)>

In the deoxidizing agent for boilers of the present invention, a mass ratio between the hydroxylamine compound of the component (A) and the heterocyclic compound of the component (B) (hereinafter sometimes referred to as the "A/B ratio") is preferably 1:10 to 10:1, more preferably 1:5 to 5:1, and further preferably 1:2 to 2:1.

Besides, in the deoxidizing agent for boilers of the present invention, a mass ratio between the hydroxylamine compound of the component (A) and the aminophenol derivative of the component (C) (hereinafter sometimes referred to as the "A/C ratio") is preferably 2:1 to 20:1, more preferably 3:1 to 15:1, and further preferably 4:1 to 13:1.

Furthermore, in the deoxidizing agent for boilers of the present invention, a mass ratio between the heterocyclic compound of the component (B) and the aminophenol derivative of the component (C) (hereinafter sometimes referred to as the "B/C ratio") is preferably 2:1 to 20:1, more preferably 3:1 to 15:1, and further preferably 4:1 to 13:1.

When the A/B ratio, the A/C ratio and the B/C ratio respectively fall in the above-described ranges, the interaction among the component (A), the component (B) and the component (C) can be easily exhibited, and the oxygen removal efficiency can be easily increased under wide temperature conditions.

Incidentally, although the preferable range of each of the A/B ratio, the A/C ratio and the B/C ratio is described as three levels, the respective levels can be appropriately combined. For example, it is possible to set the A/B ratio to 1:10 to 10:1 of the first level, the A/C ratio to 3:1 to 15:1 of the second level, and the B/C ratio to 4:1 to 13:1 of the third level.

### <(D) Aromatic Compound>

The deoxidizing agent for boilers of the present invention may further comprise, as a component (D), an aromatic compound substituted with at least two or more hydroxy groups and not having an amino group or a substituted amino group.

When the aromatic compound of the component (D) is comprised, the oxygen removal efficiency can be further increased under wide temperature conditions.

The aromatic compound of the component (D) is preferably one substituted with two hydroxy groups, and more preferably an aromatic compound in which a hydroxy group is substituted in the 1,3-position on a benzene ring.

Examples of the aromatic compound of the component (D) include hydroquinone, pyrogallol, methylhydroquinone, trimethylhydroquinone, t-butylhydroquinone, t-butylcatechol, orcinol (also known as: 5-methylresorcinol), resorcinol and propyl gallate. Among these, one or more selected from the group consisting of orcinol, resorcinol and propyl gallate are preferred from the viewpoint of the oxygen removal effect under wide temperature conditions.

A ratio between a total mass of the hydroxylamine compound of the component (A) and the heterocyclic compound of the component (B) and a total mass of the aminophenol derivative of the component (C) and the aromatic compound of the component (D) [(mass of component (A) + mass of component (B)) : (mass of component (C) + mass of component (D))] is preferably 2:1 to 20:1, more preferably 3:1 to 15:1, and further preferably 5:1 to 13:1 from the viewpoint of the oxygen removal efficiency.

### [Method for Deoxidizing Boiler Water System]

In a method for deoxidizing a boiler water system of the present invention, the above-described deoxidizing agent for boilers of the present invention is added to a boiler water system.

An amount of the deoxidizing agent for boilers to be added to a boiler water system is not especially limited but is appropriately determined depending on a dissolved oxygen concentration, water quality and the like of water to be treated, and from the viewpoint of synergistic effect among the components (A) to (C), the amount is preferably set so that the concentrations of the components (A) to (C) in boiler feed-water can fall respectively in the following ranges.

The concentration of the hydroxylamine compound of the component (A) in the boiler feed-water is preferably 0.001 to 1000 mg/L, more preferably 0.005 to 500 mg/L, and further preferably 0.01 to 200 mg/L.

The concentration of the heterocyclic compound of the component (B) in the boiler feed-water is preferably 0.001 to 1000 mg/L, more preferably 0.005 to 500 mg/L, and further preferably 0.01 to 200 mg/L.

The concentration of the aminophenol derivative of the component (C) in the boiler feed-water is preferably 0.0001 to 500 mg/L, more preferably 0.001 to 100 mg/L, and further preferably 0.002 to 50 mg/L.

Incidentally, although the preferable range of the concentration in the boiler feed-water of each of the components (A) to (C) is described as three levels, the respective levels can be appropriately combined. For example, it is possible to set the concentration of the component (A) to 0.001 to 1000 mg/L of the first level, the concentration of the component (B) to 0.05 to 500 mg/L of the second level, and the concentration of the component (C) to 0.002 to 50 mg/L of the third level.

Besides, a ratio among the concentrations of the components (A) to (C) in the boiler feed-water is preferably set in accordance with the mass ratio among the components (A) to (C) in the deoxidizing agent for boilers described above.

Besides, when the aromatic compound of the component (D) is added, a concentration of the aromatic compound of the component (D) in the boiler feed-water is preferably 0.0002 to 500 mg/L, more preferably 0.001 to 100 mg/L, and further preferably 0.002 to 50 mg/L.

In this case, a ratio among the concentrations of the components (A) to (D) in the boiler feed-water is preferably set in accordance with the mass ratio among the components (A) to (D) in the deoxidizing agent for boilers described above.

A position where the deoxidizing agent for boilers is to be injected is not especially limited, and it can be injected in an appropriate position in accordance with installation conditions, and is injected preferably to a feed-water system.

When the deoxidizing agent for boilers is added to a boiler water system, the components (A) to (C) and the component (D) added if necessary may be simultaneously added, or these may be separately added.

### <Additional Agent>

In a method for removing dissolved oxygen of the present invention, any of additional agents usually used in a boiler water treatment, such as neutralizing amine, phosphate, an alkali agent and an anticorrosive, can be appropriately used together.

### Examples

Next, the present invention will be described in more details with reference to examples, and it is noted that the present invention is not limited to these examples.

### 1. Test 1 (Verification of Oxygen Removal Effect under General Temperature Condition in Feed-water System)

Ultra-pure water in which dissolved oxygen therein had been adjusted to 500 µg/L at 40°C was fed to a pressure container having a capacity of 4 L. Sodium hydroxide was added to the resultant feed-water to adjust pH to 10.5. Besides, a deoxidizing agent having a composition of Table 1 was added to the feed-water at a concentration of Table 1. Without generating steam, conditions of an inside temperature of 180°C and an inside pressure of 1.0 MPa were retained for 24 hours. Here, blow water was cooled to room temperature with a heat exchanger, a dissolved oxygen concentration in the thus cooled water was measured with a dissolved oxygen meter, and a deoxidation ratio (%) [(dissolved oxygen concentration before test - dissolved oxygen concentration after test) x 100 / dissolved oxygen concentration before test] was calculated.

**Table 1**

| | Component (A) | | Component (B) | | Component (C) | | Component (D) | | Deoxidation ratio (%) |
|---|---|---|---|---|---|---|---|---|---|
| | Compound | Additive Concentration [mg/L] | Compound | Additive Concentration [mg/L] | Compound | Additive Concentration [mg/L] | Compound | Additive Concentration [mg/L] | |
| Example 1-1 | DEHA | 1.5 | 1A4MP | 1.5 | 4A3M | 0.3 | - | - | 79 |
| Example 1-2 | DEHA | 1.5 | 1A4MP | 1.5 | 4A3M | 0.15 | Orcinol | 0.15 | 87 |
| Example 1-3 | DEHA | 1.5 | 1A4MP | 1.3 | 4A3M | 0.5 | - | - | 97 |
| Example 1-4 | DEHA | 1.5 | 1A4MP | 1.0 | 4A3M | 0.8 | - | - | 100 |
| Example 1-5 | DEHA | 1.5 | 1A4MP | 1.5 | 2-Amino-p-cresol | 0.3 | - | - | 78 |
| Comparative Example 1-1 | DEHA | 1.65 | 1A4MP | 1.65 | - | 0 | - | - | 55 |
| Comparative Example 1-2 | DEHA | 3 | - | - | 4A3M | 0.3 | - | - | 75 |
| Comparative Example 1-3 | DEHA | 3.3 | - | - | - | 0 | - | - | 48 |
| Comparative Example 1-4 | - | - | - | - | 4A3M | 0.6 | - | - | 27 |
| Comparative Example 1-5 | DEHA | 3 | - | - | - | - | Hydroquinone | 0.3 | 64 |
| Comparative Example 1-6 | - | - | 1A4MP | 3.3 | - | - | - | - | 0 |
| Comparative Example 1-7 | DEHA | 1.5 | 1A4MP | 1.5 | - | - | Pyrogallol | 0.3 | 58 |

In Table 1 and Table 2, DEHA denotes N,N-diethylhydroxylamine, 1A4MP denotes 1-amino-4-methylpiperazine, and 4A3M denotes 4-amino-3-methylphenol.

### 2. Test 2 (Verification of Oxygen Removal Effect under General Temperature Condition in Boiler Chamber)

Ion-exchanged water having been saturated with atmospheric oxygen at 60°C was fed to a natural circulation test boiler having a capacity of 5 L. Besides, a deoxidizing agent having a composition of Table 2 was added to the resultant feed-water in a concentration of Table 2. The test boiler was operated at an inside temperature of 290°C, an inside pressure of 7.5 MPa, an evaporation rate of 7 L/h and a blow rate of 0.8 L/h with trisodium phosphate added to the feed-water at a rate of 1 mg/L. The thus generated steam was completely condensed with a heat exchanger to obtain condensed water of room temperature, and a dissolved oxygen concentration in the condensed water was measured with a dissolved oxygen meter.

**Table 2**

| | Component (A) | | Component (B) | | Component (C) | | Component (D) | | Dissolved Oxygen Concentration in Condensed Water [mg/L] |
|---|---|---|---|---|---|---|---|---|---|
| | Compound | Additive Concentration [mg/L] | Compound | Additive Concentration [mg/L] | Compound | Additive Concentration [mg/L] | Compound | Additive Concentration [mg/L] | |
| Example 2-1 | DEHA | 5.5 | 1A4MP | 5.5 | 4A3M | 1 | - | - | 0.2 |
| Example 2-2 | DEHA | 8.25 | 1A4MP | 8.25 | 4A3M | 1.5 | - | - | <0.1 |
| Example 2-3 | DEHA | 5.5 | 1A4MP | 5.5 | 4A3M | 0.5 | Orcinol | 0.5 | 0.2 |
| Example 2-4 | DEHA | 8.25 | 1A4MP | 8.25 | 4A3M | 0.75 | Orcinol | 0.75 | <0.1 |
| Comparative Example 2-1 | DEHA | 7 | 1A4MP | 5 | - | - | - | - | 0.4 |
| Comparative Example 2-2 | DEHA | 10 | 1A4MP | 8 | - | - | - | - | 0.2 |
| Comparative Example 2-3 | DEHA | 10 | - | - | 4A3M | 2 | - | - | 1.5 |
| Comparative Example 2-4 | DEHA | 15 | - | - | 4A3M | 3 | - | - | 1.1 |
| Comparative Example 2-5 | DEHA | 12 | - | - | - | - | - | - | 1.9 |
| Comparative Example 2-6 | DEHA | 18 | - | - | - | - | - | - | 1.6 |
| Comparative Example 2-7 | DEHA | 10 | - | - | - | - | Hydroquinone | 2 | 1.4 |
| Comparative Example 2-8 | DEHA | 15 | - | - | - | - | Hydroquinone | 3 | 1 |
| Comparative Example 2-9 | DEHA | 10 | - | - | 4A3M | 1 | Orcinol | 1 | 1.5 |
| Comparative Example 2-10 | DEHA | 15 | - | - | 4A3M | 1.5 | Orcinol | 1.5 | 1 |
| Comparative Example 2-11 | DEHA | 10 | - | - | 4A3M | 1 | Resorcinol | 1 | 1.7 |
| Comparative Example 2-12 | DEHA | 15 | - | - | 4A3M | 1.5 | Resorcinol | 1.5 | 1.3 |
| Comparative Example 2-13 | DEHA | 5.5 | 1A4MP | 5.5 | - | - | Pyrogallol | 1 | 0.8 |
| Comparative Example 2-14 | DEHA | 8.25 | 1A4MP | 8.25 | - | - | Pyrogallol | 1.5 | 0.3 |

It was confirmed, based on results shown in Tables 1 and 2, that the deoxidizing agent for boilers of the present invention using the hydroxylamine compound of the component (A), the heterocyclic compound having an N-substituted amino group of the component (B) and the aminophenol derivative of the component (C) together can increase the oxygen removal efficiency under wide temperature conditions ranging from general temperature condition in a feed-water system to general temperature condition in a boiler chamber, and can effectively prevent corrosion in a range from a feed-water system to a boiler water system. It was confirmed that a deoxidizing agent for boilers containing the aromatic compound of the component (D) in addition to the components (A) to (C) (Examples 1-2, 2-3 and 2-4) is particularly excellent in the above-described effects.

On the other hand, a deoxidizing agent for boilers of a comparative example not containing any one of the hydroxylamine compound of the component (A), the heterocyclic compound having an N-substituted amino group of the component (B) and the aminophenol derivative of the component (C) cannot increase the oxygen removal efficiency under wide temperature conditions ranging from general temperature condition in a feed-water system to general temperature condition in a boiler chamber. For example, a deoxidizing agent containing the components (A) and (B) but not containing the component (C) exhibited a value of the oxygen removal efficiency approximate to that of the examples under high temperature environment (under the general temperature condition in a boiler chamber) (Comparative Examples 2-1, 2-2 and 2-14), but is insufficient in the oxygen removal efficiency under low temperature environment (under the general temperature condition in a feed-water system) (Comparative Examples 1-1 and 1-7). Alternatively, a deoxidizing agent containing the components (A) and (C) but not containing the component (B) exhibited a value of the oxygen removal efficiency approximate to that of the examples under low temperature environment (under the general temperature condition in a feed-water system) (Comparative Example 1-2), but is insufficient in the oxygen removal efficiency under high temperature environment (Comparative Examples 2-3 and 2-4). Besides, a deoxidizing agent not containing the component (A) is insufficient in the oxygen removal efficiency under low temperature environment (under the general temperature condition in a feed-water system) (Comparative Examples 1-4 and 1-6).

## Claims

1. A deoxidizing agent for boilers, comprising (A) a hydroxylamine compound represented by the following general formula (I), (B) a heterocyclic compound having an N-substituted amino group, and (C) an aminophenol derivative represented by the following general formula (II), 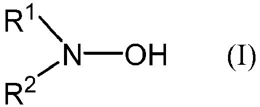 wherein R¹ and R² each independently represent an alkyl group having 1 to 5 carbon atoms; 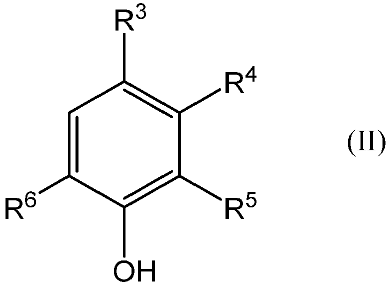 wherein R³ to R⁶ each independently represent any one of (a) the following general formula (III), (b) -OR¹⁰ and (c) -R¹¹, at least one of R³ to R⁶ representing (a), and R¹⁰ and R¹¹ each independently represent a hydrogen atom or an alkyl group having 1 to 4 carbon atoms; 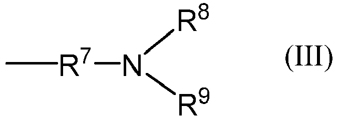 wherein R⁷ represents a single bond or an alkylene group having 1 to 4 carbon atoms, and R⁸ and R⁹ each independently represent a hydrogen atom or an alkyl group having 1 to 4 carbon atoms.

2. The deoxidizing agent for boilers according to claim 1, wherein the hydroxylamine compound of the component (A) is N,N-diethylhydroxylamine.

3. The deoxidizing agent for boilers according to claim 1 or 2, wherein the heterocyclic compound of the component (B) is one or more selected from the group consisting of 1-amino-4-methylpiperazine and 1-aminopyrrolidine.

4. The deoxidizing agent for boilers according to any one of claims 1 to 3, wherein the aminophenol derivative of the component (C) is one or more selected from the group consisting of 4-aminophenol, 2-aminophenol, 4-amino-3-methylphenol, 3-amino-4-methylphenol and 4-amino-3-(aminomethyl)-phenol.

5. The deoxidizing agent for boilers according to any one of claims 1 to 4, wherein a mass ratio between the hydroxylamine compound of the component (A) and the heterocyclic compound of the component (B) is 1:10 to 10:1, a mass ratio between the hydroxylamine compound of the component (A) and the aminophenol derivative of the component (C) is 2:1 to 20:1, and a mass ratio between the heterocyclic compound of the component (B) and the aminophenol derivative of the component (C) is 2:1 to 20:1.

6. The deoxidizing agent for boilers according to any one of claims 1 to 5, further comprising (D) an aromatic compound substituted with at least two or more hydroxy groups and not having an amino group or a substituted amino group.

7. The deoxidizing agent for boilers according to claim 6, wherein the aromatic compound of the component (D) is one or more selected from the group consisting of orcinol, resorcinol and propyl gallate.

8. The deoxidizing agent for boilers according to claim 6 or 7, wherein a ratio between a total mass of the hydroxylamine compound of the component (A) and the heterocyclic compound of the component (B) and a total mass of the aminophenol derivative of the component (C) and the aromatic compound of the component (D) is 2:1 to 20:1.

9. A method for deoxidizing a boiler water system, wherein the deoxidizing agent for boilers according to any one of claims 1 to 8 is added to a boiler water system.

10. The method for deoxidizing a boiler water system according to claim 9, wherein the deoxidizing agent for boilers is added in such a manner that a concentration of the hydroxylamine compound of the component (A) in boiler feed-water be 0.001 to 1000 mg/L, that a concentration of the heterocyclic compound of the component (B) in the boiler feed-water be 0.001 to 1000 mg/L, and that a concentration of the aminophenol derivative of the component (C) in the boiler feed-water be 0.0001 to 500 mg/L.
